# EUROPÄISCHE PATENTSCHRIFT

(11) **EP 2 568 464 B1**
(45) Veröffentlichungstag und Bekanntmachung des Hinweises auf die Patenterteilung: **02.04.2014**
(21) Anmeldenummer: 11180778.0
(22) Anmeldetag: 09.09.2011
(51) Int. Cl.: G09F 7/00, G09F 9/302, G09F 15/00, G09F 19/02, G09F 19/22, G09F 27/00

(54) **Tonnenförmig faltbare und versenkbare Anzeigeeinrichtung**
Barrel-shaped collapsible and retractable display device
Dispositif d'affichage en forme de tonneau pliable et rétractable

(43) Veröffentlichungstag der Anmeldung: 13.03.2013
(73) Patentinhaber: Global Bright Media Werbe GmbH, 1010 Wien (AT)
(72) Erfinder: Fidler, Franz Bernhard, 1010 Wien (AT); Haas, Andreas, 1010 Wien (AT); Stöger, Elmar, 1010 Wien (AT); Swatek, Alexander Josef, 1010 Wien (AT); Tragatschnig, Jörg, 5700 Zell am See (AT)
(74) Vertreter: Weiser, Andreas

(56) Entgegenhaltungen:
- WO-A1-02/33685
- WO-A1-2008/047970
- WO-A1-2010/146070
- KR-B1- 100 831 047

## Beschreibung

Die Erfindung betrifft eine Anzeigeeinrichtung bestehend aus einem Fuß, der mehrere Paneele trägt, die mittels Verbindungselementen beweglich miteinander verbunden sind, einer Hubvorrichtung und einer in den Erdboden versenkbaren Aufnahmevorrichtung, die zum Aufnehmen der zusammengefalteten Paneele samt Fuß und Hubvorrichtung ausgebildet ist, wobei die Hubvorrichtung zum Anheben der Paneele aus der Aufnahmevorrichtung und zum Absenken der Paneele in die Aufnahmevorrichtung ausgebildet ist.

Das Dokument WO 2010/146070 A1 offenbart eine solche Anzeigeeinrichtung mit einer ungeraden Anzahl von rechteckigen Paneelen. Die Paneele sind durch Verbindungselemente an ihren Längsseiten beweglich miteinander verbunden, wobei das mittlere Paneel mit seiner unteren Querseite an dem Fuß der Anzeigeeinrichtung befestigt ist. Um mit den Paneelen der Anzeigeeinrichtung Bildinformation anzuzeigen sind die Paneele in einer Ebene angeordnet.

Die bekannte Anzeigeeinrichtung kann im Erdboden versenkt werden, wofür die Paneele zusammengefaltet werden. Hierbei falten sich die Paneele entsprechend einer Leporellobeziehungsweise Zickzack-Faltung um das an dem Fuß befestigte mittlere Paneel zusammen. Anschließend senkt sich der Fuß mit den zusammen gefalteten Paneelen in eine im Erdboden vorgesehene Aufnahmevorrichtung ab, bis sich die gesamte Anzeigeeinrichtung unter dem Erdniveau befindet.

Bei der bekannten Anzeigeeinrichtung hat sich als Nachteil erwiesen, dass die Aufnahmevorrichtung zum Aufnehmen des Fußes und der zusammen gefalteten Paneele sehr lang sein muss. Dies erschwert die Anlieferung der Anzeigeeinrichtung und verteuert die Montage, da ein sehr tiefes Loch in den Erdboden gegraben werden muss.

Weiters hat sich bei der bekannten Anzeigeeinrichtung als Nachteil erwiesen, dass mit der Anzeigeeinrichtung, sobald die Paneele leporelloartig zusammengefaltet sind, keine Bildinformation mehr angezeigt werden kann. Auch hat sich gezeigt, dass die ebene Anordnung der Paneele zur Anzeige von Bildinformation nicht immer optimal ist. Beispielsweise könnten mehrere Gruppen von Betrachtern die Bildinformation betrachten wollen, die sich aber an unterschiedlichen Positionen vor beziehungsweise neben der Anzeigeeinrichtung befinden.

Der Erfindung liegt die Aufgabe zugrunde eine versenkbare Anzeigeeinrichtung zu schaffen, bei der die vorstehend angeführten Nachteile vermieden sind. Erfindungsgemäß wird diese Aufgabestellung dadurch gelöst, dass die Paneele um den Fuß und insbesondere auch um die Hubvorrichtung tonnenförmig zusammenfaltbar sind und, dass die Aufnahmevorrichtung zum Aufnehmen der um den Fuß und insbesondere auch der um die Hubvorrichtung tonnenförmig zusammengefalteten Paneele ausgebildet ist.

Hierdurch ist der Vorteil erhalten, dass sich Betrachter an unterschiedlichen Positionen um die Anzeigeeinrichtung befinden können und auf jeden Fall zumindest einen Teil der mit der Anzeigeeinrichtung dargestellten Bildinformation betrachten können. Die tonnenförmig gefalteten Paneele können dann mit dem Fuß besonders einfach und platzsparend in die Aufnahmevorrichtung versenkt werden. Auch während dem Versenken können die Betrachter die Bildinformation weiter betrachten. Durch die tonnenförmige Faltung der Paneele beim Versenken in die Aufnahmevorrichtung kann die Aufnahmevorrichtung vorteilhafterweise als Zylinder ausgebildet sein, wodurch eine kostengünstige Aufnahmevorrichtung erhalten ist.

Besonders vorteilhaft ist, dass die Paneele tonnenförmig um den Fuß zusammenfaltbar sind, wodurch sich die zur Aufnahme der Paneele samt Fuß nötige Länge der Aufnahmevorrichtung verkürzt und somit sowohl den Transport als auch die Montage der Anzeigeeinrichtung vereinfacht ist. Zu einer weiteren sehr vorteilhaften Reduktion der Länge der Aufnahmevorrichtung kommt es dadurch, dass der Fuß teleskopartig in die tonnenförmig zusammen gefalteten Paneele zusammenschiebbar ist. Durch das Vorsehen von unterschiedlichen Sensoren kann der jeweils vorteilhafte Faltzustand der Anzeigeeinrichtung festgelegt werden.

Weitere vorteilhafte Ausgestaltungen der erfindungsgemäßen Anzeigeeinrichtung werden im Folgenden anhand der Figuren näher erläutert.
Figur 1 zeigt eine Anzeigeeinrichtung in vier nebeneinander angeordneten schematischen Darstellungen.
Figur 2 zeigt ein Paneel 6 der Anzeigeeinrichtung gemäß Figur 1.
Figur 3 zeigt Modulhalter der Anzeigeeinrichtung gemäß Figur 1 inklusive der zentralen Halterungen für die gesamte Bildfläche.
Figur 4 zeigt bereits miteinander verbundene Modulhalter der Anzeigeeinrichtung gemäß

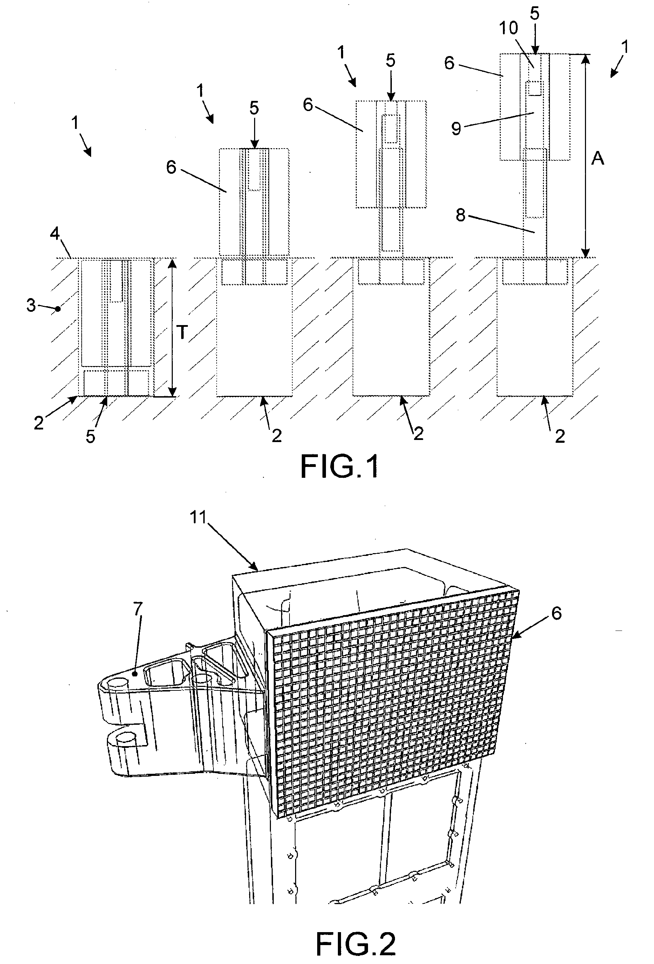

Figur 1 in einer Schrägansicht.

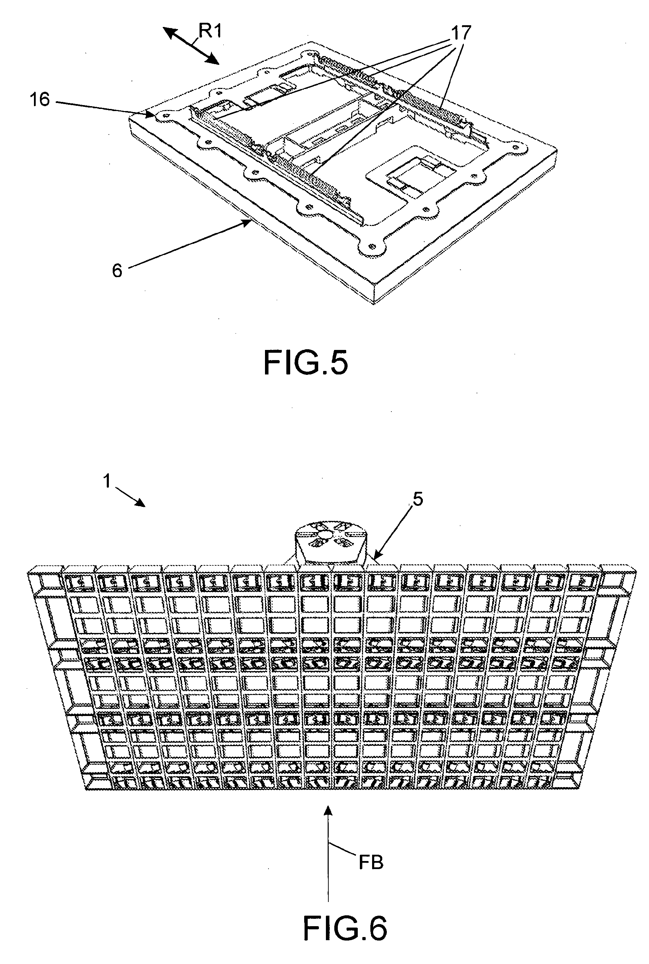

Figur 5 zeigt die Rückseite des Paneels 6 mit Befestigungsmitteln.

In den Figuren 6, 7 und 8 sind Modulhalter der Anzeigeeinrichtung gemäß Figur 1 in unterschiedlichen Faltzuständen dargestellt.

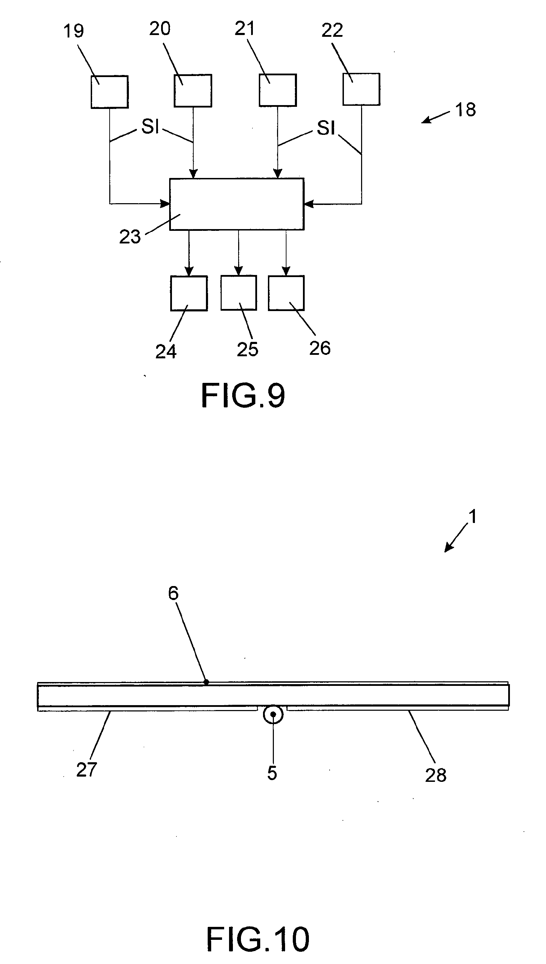

Figur 9 zeigt ein symbolisches Blockschaltbild der elektronischen Steuerung der Anzeigeeinrichtung gemäß Figur 1.
Figur 10 zeigt die Rückseite der Modulhalter die Anzeigeeinrichtung gemäß Figur 1, an denen Solarzellen befestigt sind.

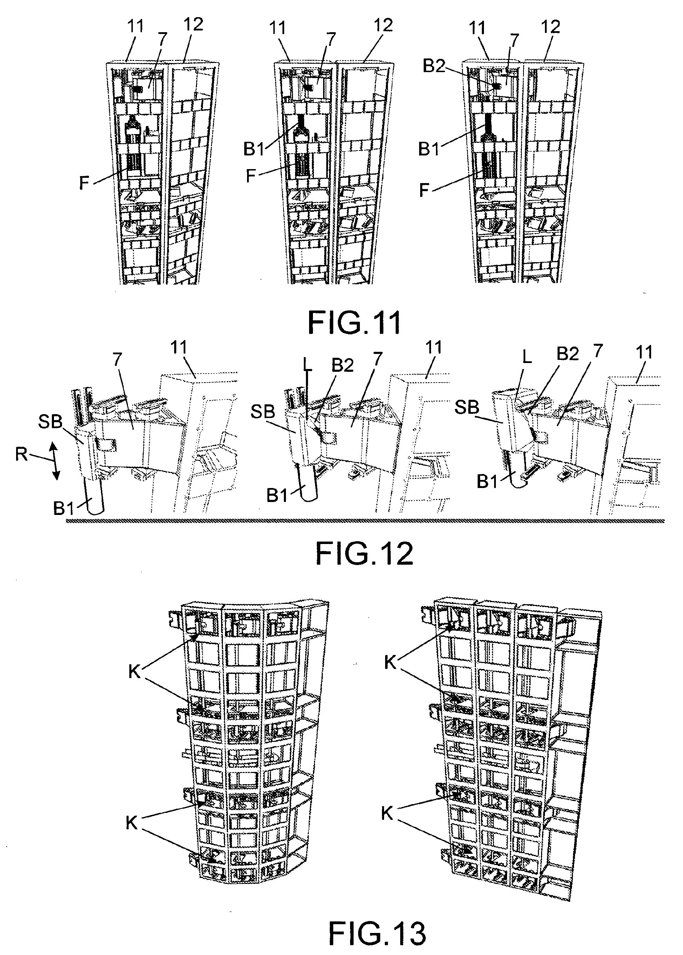

Figur 11 zeigt die Faltbewegung zweier benachbarter Modulhalter der Anzeigeeinrichtung gemäß Figur 1.
Figur 12 zeigt die Verbindungselemente der Modulhalter gemäß Figur 11.
Figur 13 zeigt Modulhalter mit einem Hauptfaltantrieb, der über eine Kettenansteuerung gleich mehrere Modulhalter während des Faltens antreibt.

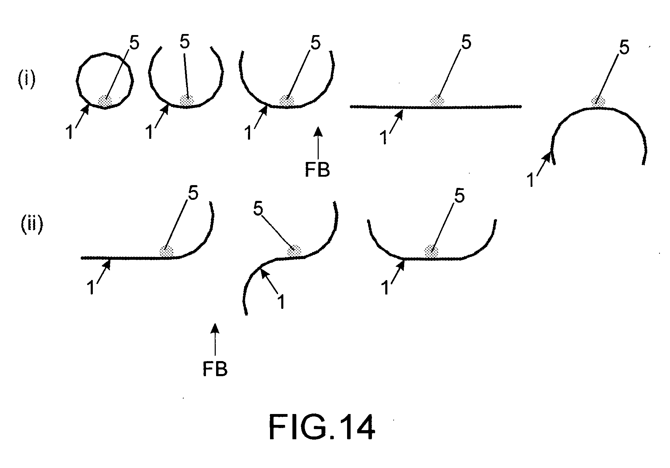

Figur 14 zeigt symbolisch mehrere mögliche Faltzustände der Anzeigeeineinrichtung gemäß Figur 1.

Figur 1 zeigt eine Anzeigeeinrichtung 1 in vier nebeneinander angeordneten schematischen Darstellungen. In der linken Darstellung in Figur 1 ist die Anzeigeeinrichtung 1 zur Gänze in eine Aufnahmevorrichtung 2 der Anzeigeeinrichtung 1 versenkt, wobei die Aufnahmevorrichtung 2 im Erdboden 3, zumindest teilweise, unter Erdniveau 4 eingegraben ist.

Die Anzeigeeinrichtung 1 weist weiters einen Fuß 5 auf, der mehrere Paneele 6 trägt, die mittels Verbindungselementen 7 beweglich miteinander verbunden sind. In den weiteren Darstellungen der Anzeigeeinrichtung 1 in Figur 1 ist die Anzeigeeinrichtung 1 beim Anheben über das Erdniveau 4 dargestellt.

Der Fuß 5 bildet zum Anheben und zum Absenken der Paneele 6 eine Hubvorrichtung, die durch drei teleskopartig ineinander schiebbare Röhren 8, 9 und 10, in den Figuren nicht näher dargestellte Servomotoren und eine Steuereinrichtung zum Ansteuern der Servomotoren gebildet ist. Zum Anheben der Anzeigeeinrichtung 1 werden die Röhren 8, 9 und 10 von den Servomotoren auseinandergeschoben und zum Versenken der Anzeigeeinrichtung 1 wieder zusammengeschoben. Durch das Vorsehen eines teleskopartig zusammenschiebbaren Fußes 5 ist der Vorteil erhalten, dass die Einbautiefe T der gesamten Anzeigeeinrichtung 1 in dem Erdboden 3 sehr gering gehalten werden kann, wobei gleichzeitig eine ausreichend hohe Anzeigehöhe A für die Anzeigeeinrichtung 1 erreicht wird.

Die Paneele 6 sind um den Fuß 5 tonnenförmig zusammenfaltbar, worauf anhand der folgenden Figuren noch näher eingegangen wird. Durch das tonnenförmige zusammenfalten der Paneele 6 um den Fuß 5 ist der Vorteil erhalten, dass die Einbautiefe T besonders gering ist, da der teleskopartig zusammen geschobene Fuß 5 innerhalb der Höhe der tonnenförmig zusammengefalteten Paneele 6 Platz hat.

In Figur 2 ist ein Paneel 6 näher dargestellt, dass durch ein allgemein bekanntes LED Modul gebildet ist. Das LED Modul weist eine Vielzahl von einzelnen LEDs auf, mit denen die mit der Anzeigeeinrichtung 1 darzustellende Bildinformation angezeigt wird. Alternativ können auch andere bekannte Module mit Bildpunkten zur Videodarstellung angebracht werden, wie zum Beispiel OLED Module, SLED Module, Lasermodule, usw. Im Fall der Anwendung im Außenbereich sind diese Module wasserfest ausgeführt. In Figur 2 ist weiters ein Modulhalter 11 schematisch dargestellt, auf dem mehrere Paneele 6 befestigt werden können, wobei in Figur 2 nur das oberste Paneel 6 dargestellt ist. In dem Modulhalter 11 können weiters Ventilatoren zur Kühlung der Paneele 6 sowie die Ansteuerelektronik zur Ansteuerung der Paneele 6 vorgesehen sein. Im Fall der Anwendung im Außenbereich sind die Modulhalter 11 wetterfest ausgeführt.

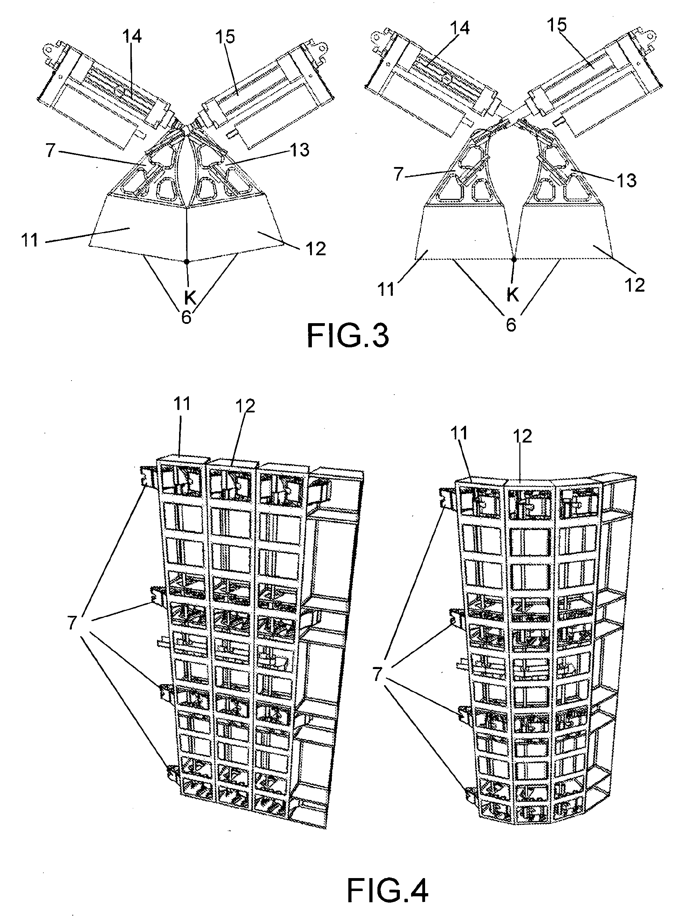

In Figur 2 ist weiters eines der Verbindungselemente 7 dargestellt, mit denen die Modulhalter 11 beweglich miteinander verbunden sind. In Figur 3 ist der Modulhalter 11 und ein zweiter Modulhalter 12 der Anzeigeeinrichtung 1 dargestellt, die mit Verbindungselementen 7 und 13 und Servomotoren 14 und 15 über das Gehäuse der Anzeigeeinrichtung 1 miteinander verbunden sind. In der linken Darstellung in Figur 3 sind die Modulhalter 11 und 12 derart positioniert, dass die an den Modulhaltern 11 und 12 befestigten Paneele 6 zueinander verkippt sind und den Faltzustand einer Faltung einnehmen. Durch die Aneinanderreihung von in dieser Position positionierten Modulhaltern entsteht eine Faltung der Paneele 6, worauf nachfolgend noch näher eingegangen ist. In der rechten Darstellung in Figur 3 sind die Modulhalter 11 und 12 derart positioniert, dass die an den Modulhaltern 11 und 12 befestigten Paneele 6 eine Ebene bilden beziehungsweise sich in einem Faltzustand einer faltungsfreien Ebene befinden.

Figur 11 zeigt die Faltbewegung zweier benachbarter Modulhalter 11 und 12. Wie in den Figuren 3 und 12 dargestellt, sind während der Faltbewegung die Verbindungselemente 7 des einen Modulhalters 11 immer über entsprechende Lineargleitführungen L innerhalb des benachbarten Modulhalters 12 gelagert, in welchem sich weiters der Faltantrieb F für den jeweiligen Modulhalter befindet. Dieser Faltantrieb F besteht pro Modulhalter aus zwei Servomotoren mit jeweils zwei, beziehungsweise in Summe vier pro Modulhalter, angebrachten Bolzen-Schieberkinematik Elementen. Jedes Bolzen-Schieberkinematik Element besteht aus einen Bolzen B1, einem Schieberblock SB und einem Bolzen B2. Wenn die Spindel des Servomotors ausfährt (in FIG 11 im Bildverlauf von links nach rechts) so drücken die Schieberblöcke SB den am zu faltenden Modulhalter befindlichen Bolzen B 1 in jene Richtung R, in welche den Modulhalter falten soll. Bei entsprechender Fertigungspräzision kann dadurch eine spielfreie Faltbewegung realisiert werden.

Bei Bedarf können (in den Figuren nicht näher dargestellt) entsprechende Ankersysteme, jeweils bestehend aus einem Bolzen der in ein Loch verriegelt, die einzelnen Modulhalter in den unterschiedlichen Faltzuständen verriegelt werden, um so einen etwaigen Druck auf die Faltantriebe zu verringern bzw. zu verhindern.

Bei Bedarf kann (in den Figuren nicht näher dargestellt) die Anzeigeeinrichtung auch so ausgeführt werden, dass beim Entfalten Federn vorgespannt werden, welche mit den Schieberblöcken SB verbunden sind. Dadurch kann die Anzeigeeinrichtung z.B. im Falle eines Stromausfalls, automatisch wieder in den gefalteten Zustand zurückgebracht werden ohne, dass dazu eine Betätigung der Servomotoren notwendig ist. Der einzige sich selbsthaltende Zustand der Bildwand in dieser Ausführungsform ist der gefaltete Zustand.

Figur 13 zeigt alternativ zu der in Figur 11 dargestellten Variante des Faltantriebs eine Möglichkeit, einen Hauptfaltantrieb zu realisieren, der über eine Kettenansteuerung K gleich mehrere Modulhalter während des Faltens antreibt. Hierdurch können einzelnen Faltantriebe mit Servomotoren in jedem Modulhaltern eingespart werden. Die Kettenansteuerung K könnte so ausgebildet sein, dass jeweils vier Schieberblöcke SB innerhalb eines Modulhalters über eine Spindel (angetrieben über eine im Modulhalter gelagerte Spindelmutter) verschoben werden. Der Antrieb der Spindelmutter(n) könnte dabei über einen Riemen beziehungsweise über eine Kette oder über ein Seil über mehrere Modulhalter in beispielsweise den mittleren Modulhalter geleitet werden, wo letztendlich der Hauptfaltantrieb für die Faltung sitzt.

In Figur 4 sieht man die Modulhalter 11 und 12, sowie zwei weitere Modulhalter, in einer Schrägansicht links in dem Faltzustand der faltungsfreien Ebene und rechts in dem Faltzustand einer Faltung.

In Figur 5 ist die Rückseite des Paneels 6 mit Befestigungsmitteln 16 zur Befestigung des Paneels 6 an dem Modulhalter 11 dargestellt. Die Befestigungsmittel 16 weisen Federn 17 auf, wodurch das Paneel 6 federnd in die Richtungen R1 verschiebbar an dem Modulhalter 11 befestigt ist. Hierdurch ist ermöglicht, dass die Paneele 6 an dem in Figur 3 dargestellten Kontaktpunkt K ihrer Längskanten im Wesentlichen spaltenfrei aneinanderliegen. Hierdurch ist der Vorteil erhalten, dass die Bildinformation besonders gut und gleichmäßig mit der Anzeigeeinrichtung 1 angezeigt werden kann. Dieselbe Konstruktion kann auch in orthogonaler Richtung ausgeführt werden (in der Abbildung nicht dargestellt), um das Paneel 6 in der zu R1 orthogonalen Richtung federnd zu lagern.

In den Figuren 6, 7 und 8 sind Modulhalter der Paneele 6 in unterschiedlichen Faltzuständen dargestellt. In Figur 6 liegen die Modulhalter - und somit auch die Paneele 6 - in einer Ebene senkrecht zu einer Frontalbetrachtungsrichtung FB und nehmen somit den Faltzustand einer faltungsfreien Ebene ein. Eine ebene Anordnung der Paneele 6 entspricht Anzeigeeinrichtungen gemäß dem Stand der Technik.

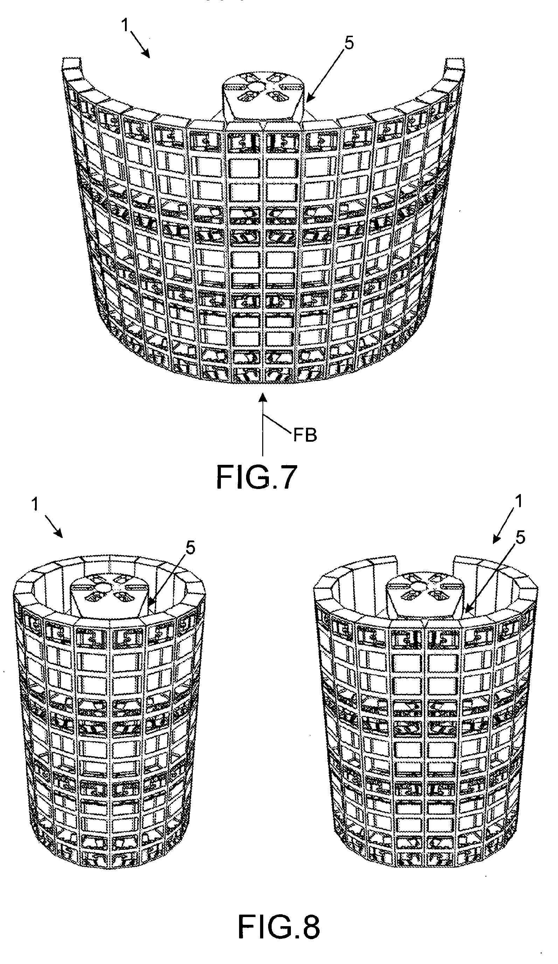

Die erfindungsgemäße Anzeigeeinrichtung 1 ist aber auch in einen Faltzustand einer halbkreisförmigen Faltung in Frontalbetrachtungsrichtung FB faltbar, wie diese in Figur 7 dargestellt ist. Dieser Faltzustand ist dann besonders vorteilhaft, wenn Betrachter in einem bestimmten Betrachtungsbereich vor und neben der Anzeigeeinrichtung zumindest einen Teil der Bildinformation sehen können sollen. Weiters ist diese halbkreisförmige Faltung dann von Vorteil, wenn ein starker Wind weht und durch die Faltung der Windwiderstand und somit der Druck auf den Fuß 5 verringert werden kann.

In Figur 8 rechts sind die Modulhalter - und somit auch die Paneele 6 - im Faltzustand einer sektionalen Faltung, wobei die Paneele 6 eine gewissen Winkelbereich des Vollkreises abdecken. Dieser Faltzustand ist dann besonders vorteilhaft, wenn Betrachter auch teilweise hinter der Anzeigeeinrichtung 1 stehen und zumindest einen Teil der Bildinformation sehen können sollen oder, wenn ein sehr starker Wind weht.

In Figur 8 links sind die Modulhalter - und somit auch die Paneele 6 - im Faltzustand der tonnenförmigen Faltung, wobei die Paneele 6 ähnlich einer Litfasssäule Bildinformation in alle Richtungen abgeben. Dieser Faltzustand ist dann besonders vorteilhaft, wenn Betrachter rund um die Anzeigeeinrichtung 1 stehen und zumindest einen Teil der Bildinformation sehen können sollen oder, wenn ein besonders starker Wind weht. Die Paneele 6 der Anzeigeeinrichtung 1 werden auch dann in diesen Faltzustand der tonnenförmigen Faltung gebracht, wenn die Anzeigeeinrichtung 1 versenkt werden soll. Besonders vorteilhaft ist auch, dass der teleskopartig zusammenschiebbare Fuß 5 beim Versenken auch nur so weit zusammen geschoben werden kann, dass die tonnenförmig gefalteten Paneele 6 gerade noch alle über dem Erdniveau 4 zu sehen sind. In dieser Position kann das Versenken unterbrochen werden und die Bildinformation von näher stehenden Betrachtern gut betrachtet werden.

In Figur 14 sind weitere Faltzustände der Anzeigeeinrichtung 1 symbolisch dargestellt. In der ersten Zeile (i) der Figur 14 sind Faltzustände dargestellt, wenn die Modulhalter über einen zentralen Servomotor als Hauptfaltantrieb mit einer Ketten-, Riemen- oder Seilansteuerung angetrieben werden. Von links nach rechts sind die tonneförmige Faltung, die sektionale Faltung, die halbkreisförmige Faltung in Frontalbetrachtungsrichtung FB, die faltungsfreie Ebene und die halbkreisförmige Faltung entgegen Frontalbetrachtungsrichtung FB als Faltzustand dargestellt. In der zweiten Zeile (ii) der Figur 14 sind Faltzustände dargestellt, wenn jeder Modulhalter durch einen individuellen Servomotor angetrieben wird. Prinzipiell ist hierbei jeder beliebige Faltzustand möglich, wobei von links nach rechts eine hockeystickförmige Faltung, eine S-förmige Faltung und eine U-förmige Faltung als Faltzustand dargestellt sind.

In Figur 9 ist ein symbolisches Blockschaltbild der elektronischen Steuerung 18 der Anzeigeeinrichtung 1 dargestellt. Die Anzeigeeinrichtung 1 weist mehrere Sensoren zum Abgeben von Sensorinformationen SI auf. Gemäß dem Ausführungsbeispiel weist die Anzeigeeinrichtung einen Windsensor 19 zur Messung der Windstärke, einen Temperatursensor 20 zur Messung der Umgebungstemperatur der Anzeigeeinrichtung 1, einen Helligkeitssensor 21 zur Messung der Helligkeit im Bereich der Anzeigeeinrichtung 1 und einen Sensor 22 zur Detektion von Personen im Umfeld der Anzeigeeinrichtung 1 auf. Der Sensor 22 kann beispielsweise durch einen Laserscanner, durch Laser-Line-Arrays, durch Detektionsmatten um die Anzeigeeinrichtung 1 oder durch Ultraschallsensoren gebildet sein. Als weitere Sensoren könnten beispielsweise ein Luftfeuchtigkeitssensor, ein Luftdrucksensor oder ein Taupunktsensor vorgesehen sein.

Die Sensorinformationen SI der Sensoren 19 bis 22 sind einer Steuereinrichtung 23 zur Ansteuerung von Antriebseinrichtungen der Anzeigeeinrichtung 1 zuführbar. Die Steuereinrichtung 23 kann durch einen sogenannten ASIC, FPGA, SPS oder einen Computer gebildet sein, von dem ein Steuerungsprogramm abgearbeitet wird. Als Antriebseinrichtung 24 sind die Servomotoren 14 und 15 sowie alle anderen Servomotoren zum Verstellen der Position der Modulträger, um die Paneele 6 in die unterschiedlichen Faltzustände zu verstellen, vorgesehen. Als Antriebseinrichtung 25 sind weiters die Servomotoren zum teleskopartigen Zusammenschieben und Ausfahren des Fußes 5 vorgesehen. Weiters ist ein Servomotor als Antriebseinrichtung 26 zum Drehen der Modulträger um den Fuß 5 vorgesehen. Weitere Antriebeseinrichtungen können vorgesehen sein, um beispielsweise einen flüssigkeitsdichten Deckel über die in die Aufnahmevorrichtung 2 versenkten Paneele 6 zu schieben. Ein Deckel kann aber z.B. auch direkt an der Oberseite des Fußes 5 befestigt werden, um so die Aufnahmevorrichtung 2 nach jedem Absenken der Anzeigevorrichtung 1 automatisch dicht zu verschließen.

Die Steuerungseinrichtung 23 ist nunmehr abhängig von der an sie übermittelten Sensorinformation SI zum Ansteuern der Antriebseinrichtungen 24 bis 26 ausgebildet. Hierbei wird beispielsweise bei ansteigender gemessener Windgeschwindigkeit die Windangriffsfläche der Anzeigeeinrichtung 1 durch Verändern des Faltzustandes und durch Drehen der Paneele 6 um den Fuß 5 und durch Versenken der Paneele 6 in die Aufnahmevorrichtung 1 verringert. Bei keinem oder leichtem Wind sind die Paneele 6 in dem Faltzustand der faltungsfreien Ebene. Wenn die Windstärke zunimmt, dann kann der Faltzustand windschlüpfriger gestaltet werden und die gebogene Seite der Paneele 6 in Richtung Wind gedreht werden. Wenn der Wind zu stark wird und eine Beschädigung der Anzeigeeinrichtung 1 zu befürchten ist, dann steuert die Steuereinrichtung die Antriebseinrichtung 24 zum tonnenförmigen Falten der Paneele 6 und die Antriebseinrichtung 25 zum Zusammenschieben des Fußes 5 und Versenken der Anzeigeeinrichtung 1 an.

Aufgrund der von dem Temperatursensor 20 abgegebenen Temperaturinformation steuert die Steuerungseinrichtung die Antriebseinrichtungen derart an, dass bei besonders niedrigen und besonders hohen gemessenen Temperaturen die Paneele 6 in die Aufnahmevorrichtung versenkt werden. So könnte die Anzeigeinrichtung 1 beispielsweise bei Temperaturen unter minus 10 Grad Celsius oder über 40 Grad Celsius automatisch versenkt werden, um eine Beschädigung der Anzeigeeinrichtung zu vermeiden.

Betrachter können die mit der Anzeigeeinrichtung 1 dargestellt Bildinformation nur sehr schlecht sehen, wenn die Sonne schräg hinter den Paneelen 6 steht und somit Gegenlicht erzeugt. Die Steuerungseinrichtung 23 ist nunmehr dazu ausgebildet aufgrund der von zumindest zwei an unterschiedlichen Positionen der Anzeigeeinrichtung angebrachten Helligkeitssensoren 21 gemessenen Helligkeit die Paneele 6 um den Fuß 5 zu drehen, damit der Betrachter durch Gegenlicht nicht gestört wird. Dies natürlich immer im Zusammenhang mit den für den Betrachter möglichen Positionen vor bzw. um die Anzeigeeinrichtung 1. Basierend auf der Helligkeitsinformation kann auch die Helligkeit der von den Paneelen 6 abgegebenen Bildinformation eingestellt werden.

Weiters kann es sein, dass sich die Betrachter um die Anzeigeeinrichtung bewegen oder an der Seite der Anzeigeeinrichtung 1 stehen beleiben. Die Anzeigeinrichtung 1 weist nunmehr einen Sensor 22 zur Detektion von Personen im Umfeld der Anzeigeeinrichtung 1 auf. Die Steuereinrichtung 23 steuert die Antriebseinrichtung 26 zum Drehen der Paneele 6 um den Fuß 5 entsprechend der Position der detektierten Personen bzw. Betrachtern an. Hierbei kann ein Mehrheitsentscheid durchgeführt werden, wenn an einer Seite der Anzeigeeinrichtung nur eine Person und an der anderen Seite der Anzeigeeinrichtung eine Gruppe von Personen detektiert wird, um der Gruppe der Personen den Vorzug zu geben.

In Figur 10 ist die Anzeigeeinrichtung 1 in ihrem Faltzustand der faltungsfreien Ebene von oben dargestellt. An der einen Seite der Modulhalter sind die Paneele 6 befestigt und an der gegenüberliegenden Seite sind Solarzellen 27 und 28 zur Energieerzeugung befestigt. Wenn gerade keine Bildinformation angezeigt wird oder sich gerade keine Person im Umfeld der Anzeigeeinrichtung befindet, dann kann die Steuerungseinrichtung, basierend auf der Helligkeitsinformation der Helligkeitssensoren 21 die Solarzellen 27 und 28 der Sonne entsprechend ihrem Sonnenstand nachführen, um eine maximale Energieausbeute zu erzielen.

Die Anzeigeeinrichtung 1 weist weiter in den Figuren nicht näher dargestellte Lautsprecher auf, die zum Wiedergeben von Toninformation ausgebildet sind. Die Steuerungseinrichtung 23 ist nunmehr weiters dazu ausgebildet die mit der Anzeigeeinrichtung 1 angezeigte Bildinformation und die von Lautsprechern der Anzeigeeinrichtung 1 abgegebene Toninformation in Abhängigkeit von der Sensorinformation SI vorzugeben bzw. zu ändern. So könnten beispielsweise Wetterwarnungen oder Wetterinformationen in Form von Farben oder Tönen wiedergegeben werden.

Gemäß einer weiteren vorteilhaften Ausführung der Erfindung weist die in den Erdboden versenkbare Aufnahmevorrichtung eine Wärmepumpe auf, um im Erdboden Luft als Kühlmedium abzukühlen und dann in die Modulträger zur Kühlung der Paneele 6 einzuleiten. Eine alternative Ausführung verwendet einen Kompressor, um die kühlere Luft im Schacht anzusaugen und dann in die Modulträger zur Kühlung der Paneele 6 einzuleiten. Hierdurch ist eine effektive Kühlung der Paneele 6 erhalten.

Es sei erwähnt, dass Teile des Fußes der Anzeigeeinrichtung auch schraubenartig zusammenschraubbar sein könnten, um die Anzeigeeinrichtung in die Aufnahmevorrichtung abzusenken. Bei einem solchen Spirallift wäre in der Röhre des Fußes eine Achse mit einer vertieften Schraubenlinie am Umfang vorgesehen, in der ein an der Röhre vorgesehener Stift eingreift. Wenn die Achse mit einem Servomotor um die eigene Achse angetrieben wird, dann hebt oder senkt sich die Anzeigeeinrichtung aus der Aufnahmeeinrichtung. Ebenso wäre es bei einem umgekehrten Wirkprinzip möglich die Schraubenlinie am Umfang der Röhre und den Stift an der Achse vorzusehen.

Weiters wäre es möglich die Anzeigeeinrichtung mit einem Scherenmechanismus aus der Aufnahmeeinrichtung anzuheben oder abzusenken.

Es kann erwähnt werden, dass die erfindungsgemäße Anzeigeeinrichtung mit ihrer Aufnahmevorrichtung zur Montage nicht unbedingt im Erdboden versenkt werden muss. Abgesehen davon, dass die Aufnahmevorrichtung natürlich auch in Schotter und anderen Materialien versenkt werden kann, könnte die Aufnahmevorrichtung aber auch in einem künstlich geschaffenem Boden versenkt montiert werden. Als künstlich geschaffener Boden ist beispielsweise das Deck oder Zwischendeck eines Schiffs zu verstehen. Hierbei könnte es sich beispielsweise um ein Kreuzfahrtsschiff oder Segelschiff handeln. Ebenso könnte die Aufnahmevorrichtung in einem LKW oder Lieferwagen montiert sein, um die Paneele beispielsweise aus dem Dach des LKW's oder Lieferwagen's heraus anzuheben. Auch wäre eine Montage der Aufnahmevorrichtung im Dach eines Hauses bzw. Hochhauses denkbar.

## Patentansprüche

1. Anzeigeeinrichtung (1) bestehend aus einem Fuß (5), der mehrere Paneele (6) trägt, die mittels Verbindungselementen (7) beweglich miteinander verbunden sind, einer Hubvorrichtung und einer zumindest teilweise in den Erdboden (3) versenkbaren Aufnahmevorrichtung (2), die zum Aufnehmen der zusammengefalteten Paneele (6) samt Fuß (5) und Hubvorrichtung ausgebildet ist, wobei die Hubvorrichtung zum Anheben der Paneele aus der Aufnahmevorrichtung und zum Absenken der Paneele in die Aufnahmevorrichtung (2) ausgebildet ist, **dadurch gekennzeichnet, dass** die Paneele (6) um den Fuß (5) und insbesondere auch um die Hubvonichtung tonnenförmig zusammenfaltbar sind und, dass die Aufnahmevorrichtung (2) zum Aufnehmen der um den Fuß (5) und insbesondere auch der um die Hubvorrichtung tonnenförmig zusammengefalteten Paneele (6) ausgebildet ist.

2. Anzeigeeinrichtung (1) gemäß Anspruch 1, **dadurch gekennzeichnet, dass** der Fuß (5) die Hubvorrichtung umfasst und zum Versenken der Paneele (6) in der Aufnahmevorrichtung (2) teleskopartig zusammenschiebbar oder schraubenartig zusammenschraubbar oder mit einem Scherenmechanismus als Hubvorrichtung versehen ist.

3. Anzeigeeinrichtung (1) gemäß einem der vorherigen Ansprüche, **dadurch gekennzeichnet, dass** die aus der Aufnahmevorrichtung (1) angehobenen Paneele (6) zum Anzeigen einer Bildinformation in einen der folgenden Faltzustände faltbar sind:
tonnenförmige Faltung; sektionale Faltung; hockeystickförmige Faltung; S-förmige Faltung; U-förmige Faltung; halbkreisförmige Faltung in Frontalbetrachtungsrichtung (FB); halbkreisförmige Faltung entgegen der Frontalbetrachtungsrichtung (FB); faltungsfreie Ebene.

4. Anzeigeeinrichtung (1) gemäß Anspruch 3, **dadurch gekennzeichnet, dass** zumindest ein Sensor (19, 20, 21, 22) zum Abgeben einer Sensorinformation (SI) vorgesehen ist und, dass eine Steuerungseinrichtung (23) zur Ansteuerung einer Antriebseinrichtung (24, 25, 26) vorgesehen ist, wobei die Steuerungseinrichtung (23) in Abhängigkeit von der Sensorinformation (SI) die Antriebseinrichtung (24, 25, 26) zum Falten der Paneele (6) in einen der Faltzustände ansteuert.

5. Anzeigeeinrichtung (1) gemäß Anspruch 4, **dadurch gekennzeichnet, dass** die Steuerungseinrichtung (23) dazu ausgebildet ist die mit der Anzeigeeinrichtung (1) angezeigte Bildinformation und/oder die von Lautsprechern der Anzeigeeinrichtung (1) abgegebene Toninformation in Abhängigkeit von der Sensorinformation vorzugeben bzw. zu ändern.

6. Anzeigeeinrichtung (1) gemäß Anspruch 4, **dadurch gekennzeichnet, dass** der Sensor durch einen Windsensor (19) gebildet ist und, dass die Steuereinrichtung (23) dazu ausgebildet ist bei ansteigender gemessener Windgeschwindigkeit die Windangriffsfläche der Anzeigeeinrichtung (1) durch Verändern des Faltzustandes und/oder durch Drehen der Paneele (6) um den Fuß (5) und/oder durch Versenken der Paneele (6) in die Aufnahmevorrichtung (2) zu verringern.

7. Anzeigeeinrichtung (1) gemäß Anspruch 4, **dadurch gekennzeichnet, dass** der Sensor durch einen Temperatursensor (20) gebildet ist und, dass die Steuereinrichtung (23) dazu ausgebildet ist in Abhängigkeit von der gemessenen Temperatur den Faltzustand der Paneele (6) zu verändern und insbesondere die Paneele (6) bei besonders niedrigen und besonders hohen gemessenen Temperaturen in die Aufnahmevorrichtung (2) zu versenken.

8. Anzeigeeinrichtung (1) gemäß Anspruch 4, **dadurch gekennzeichnet, dass** der Sensor durch einen Helligkeitssensor (21) gebildet ist und, dass die Steuereinrichtung (23) dazu ausgebildet ist in Abhängigkeit von der gemessenen Helligkeit die Paneele (6) um den Fuß (5) zu drehen, um eine Beeinträchtigung des Betrachters beim Betrachten der Bildinformation durch Sonneneinstrahlung zu reduzieren, und insbesondere zusätzlich die Helligkeit der mit den Paneelen (6) wiedergegebenen Bildinformation in Abhängigkeit von der gemessenen Helligkeit und dem Faltzustand der Paneele (6) zu ändern.

9. Anzeigeeinrichtung (1) gemäß Anspruch 4, **dadurch gekennzeichnet, dass** der Sensor durch einen Sensor (22) zur Detektion von Personen im Umfeld der Anzeigeeinrichtung (1) gebildet ist und, dass die Steuereinrichtung (23) dazu ausgebildet ist in Abhängigkeit von dem Detektionsergebnis die Paneele (6) um den Fuß (5) in Richtung der Mehrzahl detektierter Personen zu drehen.

10. Anzeigeeinrichtung (1) gemäß einem der vorherigen Ansprüche, **dadurch gekennzeichnet, dass** die Paneele (6) auf Modulträgern (11, 12) befestigte LED und/oder Laser Module zum Anzeigen der Bildinformation aufweisen, wobei die Modulträger (11, 12) untereinander durch die Verbindungselemente (7) verschwenkbar gelagert sind, und wobei die LED und/oder Laser Module auf den Modulträgern (11, 12) verschiebbar und insbesondere federnd gelagert befestigt sind, um ein spaltenfreies aneinanderliegen benachbarter LED und/oder Laser Module zu ermöglichen.

11. Anzeigeeinrichtung (1) gemäß Anspruch 10, **dadurch gekennzeichnet, dass** eine Antriebseinrichtung zum Falten der auf den Modulhaltern (11, 12) befestigten Paneelen vorgesehen ist, und dass die Antriebseinrichtung zum Falten mehrerer Modulhalter (11, 12) nur eine Falteinrichtung (F) mit zwei Servomotoren aufweist.

12. Anzeigeeinrichtung gemäß Anspruch 10, **dadurch gekennzeichnet, dass** eine Antriebseinrichtung zum Falten der auf den Modulhaltern befestigten Paneelen vorgesehen ist und, dass zwischen den Modulhaltern Federn vorgesehen sind, die von der Antriebseinrichtung beim Entfalten der Modulhalter vorgespannt werden, um ein von der Antriebseinrichtung unabhängiges Zusammenfalten der Anzeigeeinrichtung zu ermöglichen.

13. Anzeigeeinrichtung (1) gemäß Anspruch 10, **dadurch gekennzeichnet, dass** auf der den LED Modulen abgewandten Seite der Modulträger zumindest eine Solarzelle (27, 28) befestigt ist, wobei insbesondere ein Helligkeitssensor (21) vorgesehen ist und die Steuereinrichtung (23) in Abhängigkeit von der gemessenen Helligkeit dazu ausgebildet ist, die Paneele (6) um den Fuß (5) zu drehen und der Sonne, für eine maximale Energieausbeute der Solarzelle (27, 28), nachzudrehen.

14. Anzeigeeinrichtung (1) gemäß einem der vorhergehenden Ansprüche, **dadurch gekennzeichnet, dass** in der in dem Erdboden (3) versenkbaren Aufnahmevorrichtung (2) eine Wärmepumpe oder ein Kompressor vorgesehen ist, um im Erdboden (3) gekühltes Kühlmedium - insbesondere Luft - zur Kühlung der Paneele (6) zu nutzen.

## Claims

1. A display arrangement (1) consisting of a foot (5) which supports a number of panels (6) that are movably interconnected by means of connection elements (7), a lifting device, and a receiving device (2) that can be lowered at least in part into the ground (3) and that is designed to receive the panels (6), folded together, along with the foot (5) and lifting device, wherein the lifting device is designed to raise the panels from the receiving device and to lower the panels into the receiving device (2), **characterised in that** the panels (6) can be folded together in a barrel-shaped manner around the foot (5) and in particular also around the lifting device, and **in that** the receiving device (2) is designed to receive the panels (6) folded together in a barrel-shaped manner around the foot (5) and in particular also around the lifting device.

2. The display arrangement (1) according to Claim 1, **characterised in that** the foot (5) comprises the lifting device and can be pushed together telescopically or can be screwed together in a screw-like manner or is provided with a scissor mechanism as a lifting device in order to lower the panels (6) in the receiving device (2).

3. The display arrangement (1) according to one of the prior claims, **characterised in that** the panels (6) raised from the receiving device (1), to display image information, can be folded into one of the following folded states:
barrel-shaped fold; sectional fold; hockey-stick-shaped fold; S-shaped fold; U-shaped fold; semi-circular fold in a frontal viewing direction (FB); semi-circular fold against the frontal viewing direction (FB); fold-free plane.

4. The display arrangement (1) according to Claim 3, **characterised in that** at least one sensor (19, 20, 21, 22) for delivering sensor information (SI) is provided, and **in that** a control arrangement (23) for controlling a drive arrangement (24, 25, 26) is provided, wherein the control arrangement (23) controls the drive arrangement (24, 25, 26) so as to fold the panels (6) in one of the folded states in accordance with the sensor information (SI).

5. The display arrangement (1) according to Claim 4, **characterised in that** the control arrangement (23) is designed to specify or to change the image information displayed by the display arrangement (1) and/or the sound information delivered by loudspeakers of the display arrangement (1) in accordance with the sensor information.

6. The display arrangement (1) according to Claim 4, **characterised in that** the sensor is formed by a wind sensor (19), and **in that** the control arrangement (23) is designed, in the event of rising measured wind speed, to reduce the area of the display arrangement (1) exposed to wind by changing the folded state and/or by rotating the panels (6) about the foot (5) and/or by lowering the panels (6) into the receiving device (2).

7. The display arrangement (1) according to Claim 4, **characterised in that** the sensor is formed by a temperature sensor (20), and **in that** the control arrangement (23) is designed to change the folded state of the panels (6) in accordance with the measured temperature and in particular to lower the panels (6) into the receiving device (2) at particularly low measured temperatures and particularly high measured temperatures.

8. The display arrangement (1) according to Claim 4, **characterised in that** the sensor is formed by a brightness sensor (21), and **in that** the control arrangement (23) is designed to rotate the panels (6) about the foot (5) in accordance with the measured brightness in order to reduce disturbance to the viewer caused by solar irradiation when viewing the image information, and in particular additionally to change the brightness of the image information reproduced by means of the panels (6) in accordance with the measured brightness and the folded state of the panels (6).

9. The display arrangement (1) according to Claim 4, **characterised in that** the sensor is formed by a sensor (22) for detecting people in the vicinity of the display arrangement (1), and **in that** the control arrangement (23) is designed to rotate the panels (6) about the foot (5) in the direction of the majority of detected people in accordance with the detection result.

10. The display arrangement (1) according to one of the preceding claims, **characterised in that** the panels (6) comprise LEDs and/or laser modules fastened to module supports (11, 12) for displaying the image information, wherein the module supports (11, 12) are mounted pivotable relative to one another by the connection elements (7), and wherein the LEDs and/or laser modules are fastened displaceably on the module supports (11, 12) and in particular are mounted thereon resiliently for making it possible for adjacent LED and/or laser modules to bear against one another without play.

11. The display arrangement (1) according to Claim 10, **characterised in that** a drive arrangement for folding the panels fastened to the module holders (11, 12) is provided, and **in that** the drive arrangement comprises just one folding arrangement (F) having two servomotors for folding a number of module holders (11, 12).

12. The display arrangement according to Claim 10, **characterised in that** a drive arrangement for folding the panels fastened to the module holders is provided, and **in that** springs are provided between the module holders, said springs being pretensioned by the drive arrangement when the module holders are unfolded so as to enable the display arrangement to be folded together independently of the drive arrangement.

13. The display arrangement (1) according to Claim 10, **characterised in that** at least one solar cell (27, 28) is fastened on the side of the module supports facing away from the LED modules, wherein in particular a brightness sensor (21) is provided and the control arrangement (23) is designed, in accordance with the measured brightness, to rotate the panels (6) about the foot (5) and to track the sun for a maximum energy yield of the solar cell (27, 28).

14. The display arrangement (1) according to one of the preceding claims, **characterised in that** a heat pump or a compressor is provided in the receiving device (2) lowerable in the ground (3) in order to use cooling medium, in particular air, cooled in the ground (3) in order to cool the panels (6).

## Revendications

1. Dispositif d'affichage (1) constitué d'un pied (5) portant plusieurs panneaux (6) reliés de manière mobile les uns aux autres au moyen d'éléments d'assemblage (7), un dispositif de levage et un dispositif de réception (2) apte à être au moins partiellement enfoncé dans le sol (3), pour la réception des panneaux (6) pliés y compris le pied (5) et le dispositif de levage, dans lequel le dispositif de levage est conçu pour le levage des panneaux hors du dispositif de réception et pour l'abaissement des panneaux dans le dispositif de réception (2), **caractérisé en ce que** les panneaux (6) peuvent être pliés en forme de tonneau autour du pied (5) et en particulier également autour du dispositif de levage, et **en ce que** le dispositif de réception (2) est conçu pour recevoir les panneaux (6) pliés en forme de tonneau autour du pied (5) et en particulier également autour du dispositif de levage.

2. Dispositif d'affichage (1) selon la revendication 1, **caractérisé en ce que** le pied (5) comprend le dispositif de levage et peut être contracté de façon télescopique ou vissé ensemble comme un vissage ou pourvu d'un mécanisme de ciseaux en tant que dispositif de levage pour l'abaissement des panneaux (6) dans le dispositif de réception (2).

3. Dispositif d'affichage (1) selon l'une des revendications précédentes, **caractérisé en ce que**, pour l'affichage d'une information d'image, les panneaux (6) relevés hors du dispositif de réception (1) peuvent être pliés dans l'un des états de pliage suivants : pliage en forme de tonneau ; pliage sectionnel ; pliage en forme de crosse de hockey ; pliage en forme de S ; pliage en forme de U ; pliage en demi-cercle dans un sens d'observation frontal (FB) ; pliage en demi-cercle contre le sens d'observation frontal (FB) ; plan sans pli.

4. Dispositif d'affichage (1) selon la revendication 3, **caractérisé en ce qu'**il est prévu au moins un capteur (19, 20, 21, 22) pour la transmission d'une information de capteur (SI), et **en ce qu'**il est prévu un dispositif de commande (23) pour la commande d'un dispositif d'entraînement (24, 25, 26), dans lequel le dispositif de commande (23) commande le dispositif d'entraînement (24, 25, 26) en fonction de l'information de capteur (SI) pour le pliage des panneaux (6) dans l'un des états de pliage.

5. Dispositif d'affichage (1) selon la revendication 4, **caractérisé en ce que** le dispositif de commande (23) est conçu pour présenter ou modifier l'information d'image affichée avec le dispositif d'affichage (1) et/ou l'information audio transmise par des haut-parleurs du dispositif d'affichage (1), en fonction de l'information de capteur.

6. Dispositif d'affichage (1) selon la revendication 4, **caractérisé en ce que** le capteur est constitué d'un capteur de vent (19), **en ce que** le dispositif de commande (23) est conçu pour réduire la surface exposée au vent du dispositif d'affichage (1) en cas d'augmentation de la vitesse mesurée du vent, en modifiant l'état de pliage et/ou en tournant les panneaux (6) autour du pied (5) et/ou en abaissant les panneaux (6) dans le dispositif de réception (2).

7. Dispositif d'affichage (1) selon la revendication 4, **caractérisé en ce que** le capteur est constitué d'un capteur de température (20), et **en ce que** le dispositif de commande (23) est conçu pour modifier l'état de pliage des panneaux (6) en fonction de la température mesurée, et en particulier pour abaisser les panneaux (6) dans le dispositif de réception (2) en cas de températures mesurées particulièrement basses et particulièrement élevées.

8. Dispositif d'affichage (1) selon la revendication 4, **caractérisé en ce que** le capteur est constitué d'un capteur de luminosité (21), et **en ce que** le dispositif de commande (23) est conçu pour tourner les panneaux (6) autour du pied (5) en fonction de la luminosité mesurée, pour réduire une gêne de l'observateur occasionnée par la lumière du soleil lors de l'observation de l'information d'image, et en particulier pour modifier également la luminosité de l'information d'image présentée par les panneaux (6) en fonction de la luminosité mesurée et de l'état de pliage des panneaux (6).

9. Dispositif d'affichage (1) selon la revendication 4, **caractérisé en ce que** le capteur est constitué d'un capteur (22) pour la détection de personnes dans l'environnement du dispositif d'affichage (1), **en ce que** le dispositif de commande (23) est conçu pour tourner les panneaux (6) autour du pied (5), dans la direction du plus grand nombre de personnes détectées, en fonction du résultat de détection.

10. Dispositif d'affichage (1) selon l'une des revendications précédentes, **caractérisé en ce que** les panneaux (6) comportent des DEL et/ou des modules laser fixés sur des supports de module (11, 12), pour l'affichage de l'information d'image, dans lequel les supports de module (11, 12) sont montés de façon pivotante les uns par rapport aux autres par des éléments d'assemblage (7), et dans lequel les DEL et/ou les modules laser sont déplaçables sur les supports de module (11, 12) et sont en particulier fixés en étant montés élastiquement, pour permettre une disposition accolée sans espacement des DEL voisines et/ou des modules laser voisins.

11. Dispositif d'affichage (1) selon la revendication 10, **caractérisé en ce qu'**il est prévu un dispositif d'entraînement pour le pliage des panneaux fixés sur les supports de module (11, 12), et **en ce que** le dispositif d'entraînement comporte un seul dispositif de pliage (F) avec deux servomoteurs pour le pliage de plusieurs supports de module (11, 12).

12. Dispositif d'affichage selon la revendication 10, **caractérisé en ce qu'**il est prévu un dispositif d'entraînement pour le pliage des panneaux fixés sur les supports de module, et **en ce que** des ressorts sont prévus entre les supports de module, lesquels sont précontraints par le dispositif d'entraînement lors du dépliage des supports de module, pour permettre un pliage du dispositif d'affichage indépendamment du dispositif d'entraînement.

13. Dispositif d'affichage (1) selon la revendication 10, **caractérisé en ce qu'**au moins une cellule solaire (27, 28) est fixée du côté des supports de module qui est détourné des modules DEL, dans lequel il est en particulier prévu un capteur de luminosité (21) et le dispositif de commande (23) est conçu pour tourner les panneaux (6) autour du pied (5) en fonction de la luminosité mesurée et pour les tourner en fonction du soleil pour une exploitation énergétique maximale de la cellule solaire (27, 28).

14. Dispositif d'affichage (1) selon l'une des revendications précédentes, **caractérisé en ce qu'**il est prévu une pompe à chaleur ou un compresseur dans le dispositif de réception (2) apte à être enfoncé dans le sol (3), pour utiliser un moyen de refroidissement refroidi dans le sol (3) - en particulier de l'air - pour le refroidissement des panneaux (6).
